(19) Europäisches Patentamt
European Patent Office
Office européen des brevets

(11) EP 4 382 644 A1

(12) **EUROPEAN PATENT APPLICATION**
published in accordance with Art. 153(4) EPC

(43) Date of publication:
**12.06.2024 Bulletin 2024/24**

(21) Application number: **22852756.0**

(22) Date of filing: **30.06.2022**

(51) International Patent Classification (IPC):
***D01F 6/62*** (2006.01) ***B60C 9/00*** (2006.01)
***C08J 11/24*** (2006.01) ***C08J 11/26*** (2006.01)
***F16L 11/02*** (2006.01)

(52) Cooperative Patent Classification (CPC):
**B60C 9/00; C08J 11/24; C08J 11/26; D01F 6/62; F16L 11/02;** Y02W 30/62

(86) International application number:
**PCT/JP2022/026409**

(87) International publication number:
**WO 2023/013330 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.08.2021 JP 2021129362**

(71) Applicant: **BRIDGESTONE CORPORATION**
**Chuo-ku**
**Tokyo 104-8340 (JP)**

(72) Inventors:
- **FUJIE Masahiro**
  **Tokyo 104-8340 (JP)**
- **SUGIMOTO Kenichi**
  **Tokyo 104-8340 (JP)**

(74) Representative: **Marks & Clerk LLP**
**15 Fetter Lane**
**London EC4A 1BW (GB)**

(54) **CHEMICALLY-RECYCLED PET FIBERS, RUBBER-FIBER COMPOSITE, CONVEYOR BELT, HOSE AND TIRE**

(57) Provided is a chemical-recycled PET fiber and a rubber-fiber composite product such as tires using it, with reduced degradation and excellent strength and durability. In order to accomplish the above task, the present disclosure is characterized by the use of at least one of terephthalic acid (TPA), dimethyl terephthalate (DMT), and bis(2-hydroxyethyl) terephthalate (BHET) as a raw material, which are obtained by depolymerization of PET products.

EP 4 382 644 A1

## Description

TECHNICAL FIELD

This disclosure relates to a chemical-recycled PET fiber, a rubber-fiber composite, a conveyor belt, a hose, and a tire.

BACKGROUND

Today, polyesters are used in many products for human consumption, and one of the most widely known is polyethylene terephthalate, more widely known as PET, which is a saturated polyester derived from the reaction of terephthalic acid with ethylene glycol.

The consumption of PET has grown rapidly in recent years, and in particular, the compound is used in large quantities in the manufacture of containers for various liquid products, including bottled beverages.

PET is widely used, especially in the manufacture of beverage bottles, due to its light weight, durability, and low gas permeability, among other properties that are not harmful to human health. However, PET is highly resistant to atmospheric and biological agents and degrades very slowly, causing environmental problems associated with its mass production.

Therefore, from the perspective of environmental issues and economic benefits, various technologies and methods are being used to recycle PET products.

For example, there is a technique known as "material recycling" in which waste polymers are collected, purified, crushed, particulated, and used as material for products that do not need to meet high standards for quality and purity, but that form of recycling is limited in its field of use.

There is also a recycling technique for PET products called "chemical recycling" in which PET products are depolymerized and then re-polymerized. Chemical methods for depolymerizing PET in this context include, for example, the hydrolysis, methanolysis, and glycolysis methods.

For example, Patent Document 1 discloses a technique for producing chemical-recycled PET by depolymerizing PET waste into monomers and polymerizing the depolymerized monomers for use as reinforcement material in tires.

CITATION LIST

Patent Literature

PTL 1: EP 3753965 A1

SUMMARY

(Technical Problem)

However, PET recycled by techniques such as those described in Patent Document 1 has a problem in that the components (impurities) in the PET product used as the recycled material inhibit crystallization and facilitate degradation. Therefore, it is not sufficiently applicable to applications requiring strength and durability, such as tire cords, and further improvement is desired.

Therefore, the purpose of the present disclosure is to provide a chemical-recycled PET fiber with reduced degradation and excellent strength and durability. Another object of the present disclosure is to provide a rubber-fiber composite, a conveyor belt, a hose, and a tire with excellent strength and durability.

(Solution to Problem)

The inventor considered chemical recycling of PET products to solve the above problems, and found that PET, the raw material for chemical recycling, contains impurities such as isophthalic acid (IPA), which inhibit crystallization of chemical-recycled PET. After further intensive research, the inventor found that the use of at least one of terephthalic acid (TPA), dimethyl terephthalate (DMT), and bis(2-hydroxyethyl) terephthalate (BHET), which are obtained through the depolymerization of PET products, as a raw material for a chemical-recycled PET fiber can remove the IPA mentioned above, thereby controlling IPA-induced degradation, and thus achieving excellent strength and durability of the PET fiber.

That is, our chemical-recycled PET fiber is characterized in that it is made from at least one of terephthalic acid (TPA), dimethyl terephthalate (DMT), and bis(2-hydroxyethyl) terephthalate (BHET) as a raw material, which are obtained by depolymerization of PET products.

The above configuration reduces degradation and achieves excellent strength and durability.
Our rubber-fiber composite is characterized in that it uses our chemical-recycled PET fiber mentioned above.
The above configuration reduces degradation and achieves excellent strength and durability.
Our conveyor belt is characterized in that it uses our chemical-recycled PET fiber mentioned above.
The above configuration reduces degradation and achieves excellent strength and durability.
Our hose is characterized in that it uses our chemical-recycled PET fiber mentioned above.
The above configuration reduces degradation and achieves excellent strength and durability.
Our tire is characterized in that it uses our chemical-recycled PET fiber mentioned above.
The above configuration reduces degradation and achieves excellent strength and durability.

(Advantageous Effect)

The present disclosure can provide a chemical-recycled PET fiber with reduced degradation, and excellent strength and durability. Also, the present disclosure can provide a rubber-fiber composite, a conveyor belt, a hose, and a tire with excellent strength and durability.

DETAILED DESCRIPTION

The following is a specific illustration of embodiment(s) of this disclosure.

<Recycled PET fiber>

The chemical-recycled PET fiber according to this disclosure is a chemical-recycled PET fiber that uses at least one of TPA, DMT, and BHET obtained by the depolymerization of PET products as raw materials.
Here, the PET products that are the source of TPA, DMT and BHET obtained by the above-mentioned depolymerization are plastic products made mainly of polyethylene terephthalate, such as PET bottles, food packaging films, optical sheets, fibers for clothing, tire cords, etc. Among these, PET bottles are preferred for the aforementioned PET products. This is because they are readily available in large quantities and easy to process.
The aforementioned PET products are preferably crushed (flaked) prior to the process of depolymerization into monomers and BHET, although this is not limited.
In the recycled PET fiber according to this disclosure, TPA and/or DMT obtained by the depolymerization of PET products are purified and melt-polymerized with MEG to obtain IPA-free chemical-recycled PET resin, which is then solid-phase polymerized and spun to obtain a chemical-recycled PET fiber.
In addition, BHET, an intermediate obtained by the aforementioned depolymerization of PET products, is purified and melt-polymerized to obtain IPA-free chemical-recycled PET resin, which is then solid-phase polymerized and spun to obtain a chemical-recycled PET fiber.
Therefore, in the present disclosure, by using at least one of the above-mentioned TPA, DMT, and BHET as a raw material for a chemical-recycled PET fiber, a chemical-recycled PET fiber with high purity can be obtained, thus achieving excellent strength and durability.
Here, polyethylene terephthalate (PET) usually has the structure provided below.

[Chemical 1]

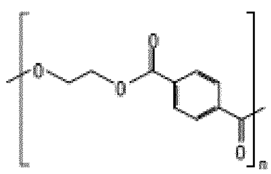

When recycled PET is produced from ordinary PET products, for example, impurities such as isophthalic acid (IPA), diethylene glycol (DEG), and terminal carboxyl groups (CEG) will be contained, as shown in Formula (1) below. These impurities were contained in the original PET product to be recycled.
When the chemical-recycled PET obtained by chemical recycling contains these impurities, especially IPA, they inhibit PET crystallization and cause degradation of PET fiber.

[Chemical 2]

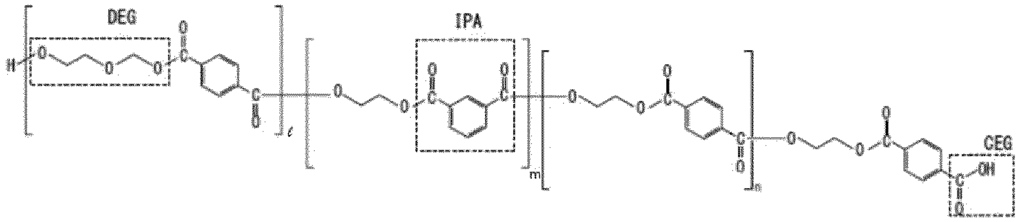

--- (1)

Here, when chemical-recycled PET is polymerized from at least one of TPA, DMT and BHET obtained by the above-mentioned depolymerization of PET products, impurities such as IPA can be completely removed by purification.

The hydrolysis method is used as a depolymerization technique to obtain TPA. The methanolysis method is used as a depolymerization technique to obtain DMT.

Also, the glycolysis method is used as a depolymerization technique to obtain BHET. This glycolysis reaction should be performed until a fully decomposed BHET is obtained. This is because fully depolymerized BHET does not contain IPA, which prevents degradation of the resulting PET fiber and improves its strength and durability.

Furthermore, from the standpoint of recycling efficiency, the glycolysis method to depolymerize into the aforementioned BHET is more preferable than the hydrolysis and methanolysis methods to depolymerize into TPA and DMT. This is because the recycling process can be shortened, and the cost of recycling can be reduced.

The BHET obtained by the above-mentioned depolymerization preferably contain no residual components such as polymerization catalysts and dyes. Since the residual components may accelerate the degradation of the resulting PET fiber, the strength and durability of the PET fiber can be more reliably improved by removing the residual components from the BHET.

In addition, from the viewpoint of controlling the degradation of the PET fiber, it is also desirable to control the content of impurities other than IPA as mentioned above.

Specifically, it is preferable that obtained recycled PET fiber has a diethylene glycol (DEG) content of 1.5% or less by weight and a terminal carboxyl group concentration (CEG) of 20 eq/ton or less.

The content of DEG in the recycled PET fiber can be determined by GC measurement after decomposition with hydrazine according to the method described in J. Polym. Sci., Part A-1, 8, 679-682 (1970), and the CEG in the recycled PET fiber can be measured by the titration method described in Analytic. Chem. 26, 1614 (1954).

The BHET obtained by the depolymerization of the PET products is purified prior to polymerization to obtain PET.

The conditions for purification are not particularly limited, and known purification conditions can be used as appropriate. For example, the above BHET can be sequentially subjected to adsorption on activated carbon, etc., removal of unwanted components by ion exchange resins, etc., melt-crystallization, molecular distillation, and other processes.

The BHET obtained by the depolymerization of the PET product is polymerized after purification to obtain a recycled PET fiber. This polymerization is a melt polymerization, and the detailed polymerization conditions (conditions such as catalyst, reaction temperature, time of polymerization, etc.) are not limited and can be selected according to the application and required performance of the chemical-recycled PET fiber.

In addition, in the polymerization of BHET, the strength and durability of the chemical-recycled PET fiber can be further enhanced by performing solid phase polymerization after the melt polymerization.

The chemical-recycled PET fiber according to this disclosure is made of fibrous PET obtained through the polymerization of BHET described above. Fiber conditions are not limited and can be selected according to the application and required performance of the chemical-recycled PET fiber.

Furthermore, the chemical-recycled PET fiber of the present disclosure preferably has a degree of crystallinity of 30% or more from the viewpoint of greater strength and durability. If the degree of crystallinity of the recycled PET fiber is 30% or more, even if there is an effect of the above-mentioned inhibition of crystallization by IPA, DEG, etc., it is considered possible to control the degradation reaction that would be caused by the penetration of water, amines, etc. in rubber into the amorphous region to a level that is not problematic for the product use.

The degree of crystallinity ($X_C$) is calculated from the following equation by measuring the fiber density ($\rho$) using a density gradient tube, and using the value of crystalline density of PET, $\rho C = 1.455\ g/cm^3$ (Polymer, 1, 330-339 (1960)) and the value of amorphous density, $\rho a = 1.335\ g/cm^3$ (Proc. Roy. Soc., A226, 531-542 (1954)).

[Mathematical 1]

$$X_c = \frac{\rho - \rho_a}{\rho_c - \rho_a} \times 100$$

Furthermore, the chemical-recycled PET fiber preferably has an intrinsic viscosity of 0.9 to 1.05 dl/g. When the intrinsic viscosity of the recycled PET fiber is 0.9 dl/g or more, the strength of the PET fiber can be increased, and when the intrinsic viscosity of the recycled PET fiber is 1.05 dl/g or less, problems such as deterioration of processability will not occur.

The chemical-recycled fiber of the present disclosure may further include biomass-derived PET. This will further reduce the environmental impact. The biomass-derived PET includes, for example, PET products made by polymerizing ethylene glycol and terephthalic acid from non-petroleum-derived materials such as plants. Such biomass-derived PET can be depolymerized and then repolymerized to obtain chemical-recycled PET. The biomass-derived PET can also be melted and remolded to obtain a mechanical-recycled PET.

<Rubber-fiber composite>

Our rubber-fiber composite is characterized by the use of our chemical-recycled PET fiber described above.

By using our chemical-recycled PET fiber according to this disclosure, excellent strength and durability can be achieved even in a rubber-fiber composite made from recycled materials.

The rubber-fiber composite should contain the aforementioned chemical-recycled PET fiber and can be mixed with other organic fibers. Other conditions for chemical-recycled PET fiber can be selected according to the required performance.

<Tire>

Our tire is also characterized by the use of our chemical-recycled PET fiber described above.

By including our chemical-recycled PET fiber according to this disclosure in the member, excellent strength and durability can be achieved even when tire cords made of recycled materials are included.

When the aforementioned rubber-fiber composite is used in tires, it is suitable for use as a carcass or belt reinforcement layer in pneumatic tires, but is not limited to this, and for example, it can be suitably used for members reinforcing the sides of tires and other members.

<Conveyor belt, hose>

Our conveyor belt is characterized by the use of our chemical-recycled PET fiber described above.

Also, our hose is characterized by the use of our chemical-recycled PET fiber described above.

By using our chemical-recycled PET fiber according to this disclosure in these articles, excellent strength and durability can be achieved even with recycled materials.

Note, that the composition of the chemical-recycled PET fiber is the same as that described above for our chemical-recycled PET fiber.

INDUSTRIAL APPLICABILITY

The present disclosure can provide a chemical-recycled PET fiber with reduced degradation and superior strength and durability. Also, the present disclosure can provide a rubber-fiber composite, a conveyor belt, a hose, and a tire with excellent strength and durability.

## Claims

**1.** A chemical-recycled PET fiber made from at least one of terephthalic acid (TPA), dimethyl terephthalate (DMT), and bis(2-hydroxyethyl) terephthalate (BHET) as a raw material, which are obtained by depolymerization of PET products.

**2.** The chemical-recycled PET fiber according to claim 1, wherein at least one of TPA, DMT, and BHET, obtained by the depolymerization, is free of isophthalic acid (IPA).

**3.** The chemical-recycled PET fiber according to claim 1 or 2, wherein the recycled PET fiber has a diethylene glycol (DEG) content of 1.5% or less by weight and a terminal carboxyl group concentration (CEG) of 20 eq/ton or less.

**4.** The chemical-recycled PET fiber according to claim 1 or 2, wherein the recycled PET fiber has a degree of crystallinity of 30% or more.

**5.** The chemical-recycled PET fiber according to claim 1 or 2, wherein the recycled PET fiber has an intrinsic viscosity of 0.9 to 1.05 dl/g.

**6.** A rubber-fiber composite using the chemical-recycled PET fiber according to claim 1 or 2.

**7.** A conveyor belt using the chemical-recycled PET fiber according to claim 1 or 2.

**8.** A hose using the chemical-recycled PET fiber according to claim 1 or 2.

**9.** A tire using the chemical-recycled PET fiber according to claim 1 or 2.

**INTERNATIONAL SEARCH REPORT**

International application No.
**PCT/JP2022/026409**

**A. CLASSIFICATION OF SUBJECT MATTER**

***D01F 6/62***(2006.01)i; ***B60C 9/00***(2006.01)i; ***C08J 11/24***(2006.01)i; ***C08J 11/26***(2006.01)i; ***F16L 11/02***(2006.01)i
FI: D01F6/62 301Z; C08J11/24 CFD; C08J11/26 CFD; B60C9/00 B; F16L11/02

According to International Patent Classification (IPC) or to both national classification and IPC

**B. FIELDS SEARCHED**

Minimum documentation searched (classification system followed by classification symbols)

D01F6/62; C08J11/00-11/28; B29B17/00-17/04; C08G3/00-64/42; B60C1/00-19/12; F16L11/00-11/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2000-169623 A (IS KK) 20 June 2000 (2000-06-20)<br>claims, paragraphs [0030], [0032]-[0042], examples, tables 1-2, fig. 1 | 1-3, 6, 9<br>4-9 |
| X<br>Y | JP 2003-55300 A (IS KK) 26 February 2003 (2003-02-26)<br>claims, paragraphs [0026], [0029]-[0039], examples, table 1 | 1-2<br>3-9 |
| X<br>Y | JP 2002-161437 A (TEIJIN LTD) 04 June 2002 (2002-06-04)<br>claims, paragraphs [0024]-[0025], [0036]-[0058], examples | 1-2<br>3-9 |
| Y | JP 2016-182685 A (FUJIFILM CORP) 20 October 2016 (2016-10-20)<br>paragraph [0048] | 3-5 |
| Y | JP 2000-512250 A (LOHMANN GMBH & CO. KG) 19 September 2000 (2000-09-19)<br>claims, p. 6, lines 9-12 | 7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 August 2022** | **30 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

**INTERNATIONAL SEARCH REPORT**

International application No.
**PCT/JP2022/026409**

**C. DOCUMENTS CONSIDERED TO BE RELEVANT**

| Category* | Citation of document, with indication, where appropriate, of the relevant passages | Relevant to claim No. |
|---|---|---|
| Y | JP 2004-19783 A (ASHIMORI IND CO LTD) 22 January 2004 (2004-01-22) claims | 8 |
| Y | JP 6-25916 A (TORAY INDUSTRIES) 01 February 1994 (1994-02-01) paragraphs [0014]-[0015] | 3 |
| Y | JP 2007-217832 A (TORAY INDUSTRIES) 30 August 2007 (2007-08-30) paragraph [0024] | 3 |
| Y | JP 2010-126614 A (TORAY INDUSTRIES) 10 June 2010 (2010-06-10) paragraph [0043] | 3 |

Form PCT/ISA/210 (second sheet) (January 2015)

**INTERNATIONAL SEARCH REPORT**
**Information on patent family members**

International application No.
**PCT/JP2022/026409**

| Patent document cited in search report | Publication date (day/month/year) | Patent family member(s) | Publication date (day/month/year) |
|---|---|---|---|
| JP 2000-169623 A | 20 June 2000 | (Family: none) | |
| JP 2003-55300 A | 26 February 2003 | (Family: none) | |
| JP 2002-161437 A | 04 June 2002 | (Family: none) | |
| JP 2016-182685 A | 20 October 2016 | KR 10-2017-0116149 A<br>paragraphs [0129]-[0130]<br>CN 107428060 A | |
| JP 2000-512250 A | 19 September 2000 | WO 1997/046470 A1<br>claims, p. 4, lines 5-7<br>EP 907590 A1<br>DE 29609848 U1<br>AT 197789 T<br>CA 2257143 A1 | |
| JP 2004-19783 A | 22 January 2004 | (Family: none) | |
| JP 6-25916 A | 01 February 1994 | (Family: none) | |
| JP 2007-217832 A | 30 August 2007 | (Family: none) | |
| JP 2010-126614 A | 10 June 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3753965 A1


### Non-patent literature cited in the description


- *J. Polym. Sci.,* 1970, vol. 8, 679-682
- *Analytic. Chem.,* 1954, vol. 26, 1614
- *Polymer,* 1960, vol. 1, 330-339
- *Proc. Roy. Soc.,* 1954, vol. A226, 531-542